# EUROPÄISCHE PATENTSCHRIFT

(11) **EP 3 759 367 B1**
(45) Veröffentlichungstag und Bekanntmachung des Hinweises auf die Patenterteilung: **15.11.2023**
(21) Anmeldenummer: 19718605.9
(22) Anmeldetag: 09.04.2019
(51) Int. Cl.: F16C 19/08, F16C 19/18, F16C 19/28, F16C 19/38, F16C 19/56

(54) **GROSSWÄLZLAGER**
LARGE ROLLING BEARING
PALIER À ROULEMENT DE GRANDE DIMENSION

(30) Priorität: 17.04.2018 DE 202018102121 U
(43) Veröffentlichungstag der Anmeldung: 06.01.2021
(73) Patentinhaber: Liebherr-Components Biberach GmbH, 88400 Biberach/Riss (DE)
(72) Erfinder: ALTMAYER, Thomas, 88441 Mittelbiberach (DE); BORN, Oliver, 89281 Altenstadt (DE); PALMER, Andreas, 88499 Riedlingen (DE)
(74) Vertreter: Thoma, Michael
(86) Internationale Anmeldenummer: PCT/EP2019/058887
(87) Internationale Veröffentlichungsnummer: WO 2019/201662

(56) Entgegenhaltungen:
- EP-A1- 2 762 737
- DE-A1-102010 051 968
- DE-A1-102014 104 599
- DE-U1-202016 003 040
- JP-A- 2003 214 446
- JP-A- 2003 222 140
- JP-A- 2006 022 851
- US-A1- 2014 197 006
- US-A1- 2017 370 406
- Skf: "SKF bearings with Solid Oil", , 31 December 2016 (2016-12-31), XP055970528, Retrieved from the Internet: URL:- [retrieved on 2022-04-19]
- Ntn: "NTN, Bearings with solid grease", , 19 April 2022 (2022-04-19), XP055970542, - Retrieved from the Internet: URL:- [retrieved on 2022-04-19]

## Beschreibung

Die vorliegende Erfindung betrifft ein Großwälzlager, insbesondere mittenfreies Großwälzlager, mit zwei konzentrischen Laufringen, zwischen denen in einem Lagerspalt eine Vielzahl von Wälzkörpern in mehreren Lagerreihen angeordnet sind, beispielsweise ein oder mehrere Axiallager und/oder ein oder mehrere Radiallager.

Bei Großwälzlagern für spezielle Einsatzzwecke wirken bisweilen beträchtliche Biegemomente und Kippkräfte auf die Lagerringe, die zu Verwindungen und einem Winkelversatz der Laufringe zueinander führen können, so dass vorzeitiger Verschleiß im Bereich der Laufringe und Wälzkörper eintritt. Solche Großwälzlager können Maße von einem oder mehreren Metern im Durchmesser aufweisen und bspw. an Windkraftanlagen eingesetzt werden, um die Rotorblätter in ihrem Pitchwinkel verstellbar an der Nabe oder die Nabe drehbar an der Gondel zu lagern, oder auch an Kranen eingesetzt werden, um bspw. den Abstützmast eines Schiffskrans oder Hafenkrans drehbar zu lagern und abzustützen, wobei hier nicht nur vertikale Kräfte abzufangen sind, sondern auch Biegemomente bzw. Kippbelastungen aufzufangen sind. Die Verwindungs- und Kippproblematik wird dabei noch verschärft, wenn die Mitte bzw. das Zentrum des Lagers auszusparen ist, um die Pitchantriebe anordnen zu können oder das abzustützende Bauteil, bspw. den genannten Kranstützmast, durch das Lager hindurchtreten zu lassen und am hindurchtretenden Teil einen Drehantrieb anbringen zu können.

Bei solchen Großwälzlagern ist eine dauerhafte und verlässliche Schmierung besonders wichtig, da ansonsten aufgrund der extrem hohen Belastungen und auch der recht speziellen Einsatzbedingungen schnell Schäden an den Laufbahnen und den Wälzkörpern entstehen. Zum einen können die hohen Kräfte und Biegemomente zu asymmetrischen Belastungen und Verwindungen führen, die insbesondere auch durch die geringen Drehgeschwindigkeiten eine gleichmäßige Schmierung schwierig machen. Die Drehzahlen liegen bei Großwälzlagern regelmäßig unter 250 U/min, wobei in vielen Einsatzfällen die Lager häufig auch über lange Zeitspannen gänzlich stillstehen oder immer wieder in dieselbe Stellung zurückkehren, wie dies beispielsweise bei den Rotorblattlagern einer Windkraftanlage der Fall ist, die häufig denselben Pitchwinkel eingestellt haben. Bei solchen langsam drehenden und/oder oft stillstehenden Großwälzlagern verteilt sich der Schmierstoff schwer gleichmäßig über das gesamte Lager und insbesondere die stark belasteten Wälzkörper und damit in Eingriff stehenden Laufbahnabschnitte sind stark belastet.

Ein Großwälzlager der eingangs genannten Art zeigt bspw. die Schrift DE 20 2016 003040 U1 oder auch die Schrift EP 20 92 204 B1, gemäß der der Nasenring des einen Laufrings durch zwei gegenüberliegende Axiallager und zwei gegenüberliegende Radiallager in der Nut des anderen Laufrings eingespannt sein soll, wobei die genannten gegenüberliegenden Axiallager und Radiallager unerwünschte Verformungen des Nasenringes verhindern und eine Ablösung der Laufringe in radialer Richtung vermeiden sollen. Ein ähnliches Großwälzlager und dessen Einbausituation am Stützmast eines Schiffkrans zeigt die Schrift WO 2008/088 213 A2.

Um bei solchen Großwälzlagern Beschädigungen wie Pittings, Einlaufen der Laufbahnen, vorzeitigem Wälzkörperverschleiß etc. infolge von unzureichender Schmierung zu vermeiden, besitzen solche Großwälzlager häufig Schmiermittelzufuhrsysteme, über die kontinuierlich Fett oder Öl oder ein ähnliches Schmiermittel nachgefüllt bzw. nachgefördert werden kann. Beispielsweise werden in den Lagerringen Schmiermittelbohrungen vorgesehen, durch die hindurch Schmiermittel auf die Laufbahnen bzw. an die Wälzkörper gefördert werden kann. Um durch das Nachfördern bzw. Hineindrücken des Schmiermittels eine Leckage zu vermeiden und das Öl bzw. Fett im Lager zu halten, werden üblicherweise Dichtungssysteme verwendet, die den Lagerspalt zwischen den Laufringen nach außen hin bzw. zur Umgebung hin abdichten. Solche Dichtungssysteme dienen nicht nur der Verhinderung bzw. Begrenzung der Schmiermittelleckage, sondern sollen auch verhindern, dass Schmutz wie Staub oder andere schädliche Medien von außen her in den Lagerspalt gelangen.

Solche Dichtungssysteme sind bei Großwälzlagern jedoch aus verschiedenen Gründen oftmals nicht dicht, beispielsweise wenn es aufgrund der sehr hohen Kräfte und Biegemomente zu Verformungen der Lagerringe kommt. Zudem wird bei Großwälzlagern aufgrund ihrer Größe bisweilen mit höheren Schmiermitteldrücken gearbeitet, damit das Schmiermittel alle Lagerbereiche erreicht. Solche Undichtigkeiten lassen einerseits Schmiermittel austreten und andererseits Schmutz und andere schädliche Medien eindringen, beispielsweise Feuchtigkeit, die dann das Schmiermittel verwässert bzw. zu einem Auswaschen bzw. Zersetzen des Fetts führen kann, wodurch das Lager die notwendige Schmierung verliert und infolgedessen versagt. Um bei Leckage zu verhindern, dass das Schmiermittel in die Umwelt gelangt, müssen oft teure Auffangmaßnahmen vorgesehen werden und das aufgefangene Schmiermittel entsorgt werden.

Zusätzlich zu diesen Betriebsproblemen kommt ein hoher Wartungsaufwand hinzu. Einerseits müssen die Lager ständig nachgeschmiert werden, was je nach Verwendungsort und Anordnung der Lager sehr aufwändig sein kann, so dass das Nachschmieren in der Praxis oft nicht in den vorgeschriebenen Intervallen ausgeführt wird, was dann zu einem Versagen der Lager führen kann. Zum anderen sind die genannten Dichtungssysteme, die eine Leckage des Schmiermittels und ein Eindringen von Schmutz verhindern sollen, Verschleißteile, die ebenfalls regelmäßig ausgetauscht werden müssen, was ebenfalls einen hohen Wartungsaufwand mit sich bringt und zu einem Stillstand bzw. zu längeren Totzeiten der Anlage führen kann.

Um den Schmieraufwand zu reduzieren, wurden auch bereits Großwälzlager mit Festkörperschmierstoffen vorgeschlagen, wobei beispielsweise die Distanzhalter zwischen den Wälzkörpern teilweise aus einem solchen Festkörperschmierstoff bestehen bzw. die Abstandshalter Taschen für solche Festkörperschmierstoffe aufweisen sollen, vgl. US 2017/0370406 oder JP 2003 222140 A, oder haubenartige Formteile aus Festkörperschmierstoff auf den Abstandshaltern aufgesetzt sein sollen, vgl. DE 10 2014 104 599 A1. Ferner schlägt es die JP 2006 22851 A vor, leistenförmige Festkörperschmierstoffe in Laufbahnnuten einzusetzen. Die JP 2003 214446 A lehrt es, Lagerspalte mit Festkörperschmierstoff zu vergießen.

Der vorliegenden Erfindung liegt die Aufgabe zugrunde, ein verbessertes Großwälzlager der eingangs genannten Art zu schaffen, das Nachteile des Standes der Technik vermeidet und letzteren in vorteilhafter Weise weiterbildet. Insbesondere soll ein mittenfreies Großwälzlager geschaffen werden, das gegen Beschädigungen oder Ausfall durch unzureichende Schmierung geschützt ist, ohne dies durch einen hohen Wartungsaufwand und Dichtigkeitsprobleme zu erkaufen.

Erfindungsgemäß wird die genannte Aufgabe durch ein Großwälzlager gemäß Anspruch 1 gelöst. Bevorzugte Ausgestaltungen der Erfindung sind Gegenstand der abhängigen Ansprüche.

Es wird also vorgeschlagen, die Wälzkörper und Laufbahnen des Großwälzlagers nicht mehr mit herkömmlichem Öl oder Fett zu schmieren, sondern den Lagerspalt zwischen den Laufringen vollständig mit einem Festkörperschmierstoff, der eine Polymermatrix und einen darin eingebetteten Schmierstoff umfasst, zu befüllen. Durch eine solche Befüllung des Lagers mit einem Festkörperschmierstoff wird das Lager zumindest nahezu wartungsfrei. Insbesondere findet ein Auswaschen und Zersetzen des Schmierstoffs nicht mehr statt.

Insbesondere kann der genannte Festkörperschmierstoff dazu vorgesehen und ausgebildet sein, den in der Polymermatrix enthaltenen Schmierstoff unter Last und/oder bei Bewegung abzugeben und/oder bei Entlastung und/oder Stillstand wieder aufzunehmen. Die Polymermatrix kann hierzu an sich ausgehärtet bzw. verfestigt, dabei aber kompressibel und/oder verformbar und/oder volumenveränderbar ausgebildet sein, so dass beim Zusammendrücken der Polymermatrix durch einen über die Wälzkörper und/oder die Laufbahnen aufgebrachten Druck auf die Festkörperschmierstoffbefüllung darin enthaltenes Schmiermittel abgibt und, wenn sich die Polymermatrix bei nachlassendem Druck wieder spannt, wieder aufnimmt. Die Polymermatrix kann nach Art eines Schwamms als Zwischenspeicher für den darin eingebetteten Schmierstoff dienen.

Mit der vollständigen Befüllung des Lagerspalts, in dem die Wälzkörper laufen, mit einem solchen Festkörperschmierstoff können viele großwälzlagerspezifische Schmierprobleme gelöst bzw. zumindest abgemildert werden. Insbesondere führen die bei einem mittenfreien Großwälzlager infolge der hohen Kräfte auftretenden Verformungen der Lagerringe nicht mehr zu einem Abreißen des Schmierfilms. Im Gegenteil können bei auftretenden Verformungen und den damit einhergehenden Quetschungen bzw. Verformungen des Festkörperschmierstoffs aktiv Schmierstoffanteile aus der Matrix abgegeben und die besonders hoch belasteten Wälzkörper stärker aktiv geschmiert werden, ohne dass hierzu eine ausgeklügelte Schmiermittelzufuhr über Schmiermittelbohrungen oder -zufuhrkanäle vorgesehen und kompliziert gesteuert werden müsste. Dabei kann auch bei den für Großwälzlagern typischen, niedrigen Drehzahlen eine ausreichende Schmierung aufrechterhalten werden.

Insbesondere kann in vorteilhafter Weiterbildung der Erfindung zumindest eine der Laufbahnen in einem Mittenabschnitt eine längsnutartige Schmiermitteltasche aufweisen, die mit Festkörperschmierstoff befüllt, vorzugsweise vollständig befüllt ist und beiderseits durch Laufbahnabschnitte flankiert ist, die die Wälzlager tragen. Im Bereich der genannten längsnutartigen Schmiermitteltasche ist an sich ein kleiner Spalt oder Hohlraum zwischen dem jeweiligen Wälzkörper und dem Material des Laufrings vorgesehen, in dem in der Laufbahn in deren Mittelabschnitt eine Längsausnehmung vorgesehen ist. Diese als Schmiermitteltasche fungierende, nutartige Längsausnehmung wird mit dem Festkörperschmierstoff befüllt, so dass von der Mitte der Laufbahn her insbesondere bei starkem Druck der Wälzkörper auf die Laufbahn Schmiermittel aus der Polymermatrix bereitgestellt und in die Kontaktzone zwischen Laufbahn und Wälzkörpern gegeben wird. Insbesondere können die seitlich flankierenden Laufbahnabschnitte von der in der Laufbahnmitte vorgesehenen Schmiermitteltasche her geschmiert werden.

Eine solche zentral in der Laufbahn vorgesehene Schmiermitteltasche, die mit Festkörperschmierstoff befüllt ist, kann insbesondere dann sinnvoll sein, wenn die sich beiderseitig, also rechts und links zu den Rändern der Laufbahn hin vorgesehenen Laufbahnabschnitte jeweils etwa schalenförmig an die Wälzkörper anschmiegen, die in diesem Fall vorteilhafterweise kugel- oder tonnenförmig ausgebildet sein können. Bei solchen schalenförmig konturierten Laufbahnabschnitten kann die genannte längsnutartige Schmiermitteltasche im Mittelabschnitt der Laufbahn im Querschnitt betrachtet vorteilhafterweise eine etwa halbmondförmig konturierte Ausbauchung bilden, die mit dem Festkörperschmierstoff befüllt ist. Durch eine solche halbmondförmige Querschnittskonturierung der Schmiermitteltasche treten bei leichten Verformungen insbesondere zu den Rändern hin, also benachbart zu den angrenzenden, schalenförmigen Laufbahnabschnitten Quetschungen des Festkörperschmierstoffes auf, wodurch Schmierstoff auf die Kontaktflächen gedrückt wird.

Grundsätzlich kann die genannte, zentrale längsnutartige Schmiermitteltasche jedoch auch anders konturiert sein, beispielsweise im Querschnitt betrachtet dreieckförmig oder U-förmig ausgebildet sein.

Eine solche Schmiermitteltasche in der Laufbahn kann nicht nur bei Kugel- oder Tonnenlagern, sondern auch bei anderen Wälzkörperformen wie Zylinder-, Kegel- oder Nadellagern vorgesehen sein.

Vorteilhafterweise können beide, einander gegenüberliegende Laufbahnen jeweils mit einer solchen längsnutartigen Schmiermitteltasche versehen sein, so dass die Wälzkörper von gegenüberliegenden Seiten her und an jeder Laufbahn mit Schmiermittel versorgt werden. Die einander gegenüberliegenden Laufbahnen können dabei jeweils in einem Mittelabschnitt mit einer solchen längsnutartigen Schmiermitteltasche versehen sein. Alternativ wäre es jedoch auch möglich, die Schmiermitteltaschen an den gegenüberliegenden Laufbahnen in Richtung der Rotationsachse der Wälzkörper zueinander zu versetzen, beispielsweise dergestalt, dass an der einen Laufbahn eine im Mittelabschnitt angeordnete Schmiermitteltasche vorgesehen ist, während an der gegenüberliegenden Laufbahn zwei voneinander beabstandete Schmiermitteltaschen vorgesehen sind. Durch solchermaßen versetzte Schmiermitteltaschen an den gegenüberliegenden Laufbahnen können die Wälzkörper über ihre gesamte Kontaktfläche - im Querschnitt betrachtet - wirkungsvoll mit Schmiermittel versorgt werden.

Je nach Ausbildung des Lagers und Anstellung der Laufbahnen können ggf. auch asymmetrisch angeordnete längsnutartige Schmiermitteltaschen vorgesehen sein, beispielsweise dergestalt, dass im Querschnitt betrachtet an der einen Laufbahn die Schmiermitteltasche leicht nach links und an der gegenüberliegenden Laufbahn leicht nach rechts versetzt angeordnet ist.

Gemäß der Erfindung ist - alternativ oder zusätzlich zu den genannten Schmiermitteltaschen in den Laufbahnen - der Lagerspalt zwischen den Lagerringen auch seitlich neben den Wälzkörpern und/oder deren Laufbahnen mit Festkörperschmierstoff befüllt. Betrachtet man den Lagerspalt und einen Wälzkörper im Querschnitt, ist also insbesondere der Lagerspalt rechts und links vom Wälzkörper mit dem Festkörperschmierstoff befüllt.

Der Festkörperschmierstoff kann hierbei vorteilhafterweise die beiden Lagerringe miteinander verbinden und eine Brücke bilden, die sich zwischen den beiden Lagerringen erstreckt und diese miteinander verbindet bzw. kontaktiert. Mit anderen Worten gesprochen besitzt der Festkörperschmierstoff in dem genannten Lagerspalt eine Dicke, die im Wesentlichen dem Spaltmaß des Lagerspalts entspricht.

Abhängig hiervon kann der Festkörperschmierstoff dabei den genannten Lagerspalt links und/oder rechts der Wälzkörperreihe jeweils über eine Breite - in Richtung der Wälzkörperdrehachse - des Lagerspalts befüllen, die zumindest jeweils, d.h. auf jeder Seite des Wälzkörpers zumindest einem Drittel des Durchmessers bzw. der Breite des Wälzkörpers entspricht. Erfindungsgemäß befüllt der Festkörperschmierstoff im Wesentlichen den gesamten Lagerspalt beiderseits der Wälzkörperreihe vollständig.

Der genannte Festkörperschmierstoff bildet dabei auf beiden Seiten der Wälzkörperreihe einen vollständig geschlossenen Ring, der den Lagerspalt und die innerhalb des Festkörperschmierstoffes angeordneten Wälzkörper zur Außenseite des Lagers hin abdichtet. Da der genannte Lagerspalt vollständig mit Festkörperschmierstoff befüllt ist, so dass er eine Brücke zwischen den beiden Lagerringen bildet, kann der Festkörperschmierstoff selbst wirkungsvoll das Eindringen von Schmutz wie beispielsweise Staub oder anderen schädlichen Medien in das Innere des Lagers verhindern. Erfindungsgemäß wird auf separate Dichtungen, die vom Festkörperschmierstoff separat ausgebildet sind und den Lagerspalt bzw. das Lagerinnere abdichten würden, verzichtet, so dass der Festkörperschmierstoff die einzige Dichtungseinrichtung bildet.

Zusätzlich zu einer Befüllung der Lagerspaltabschnitte seitlich neben der Wälzkörperreihe sind auch die Lagerspaltabschnitte zwischen den Wälzkörpern einer Wälzkörperreihe mit Festkörperschmierstoff befüllt, wobei die genannten Lagerspaltabschnitte zwischen den Wälzkörpern vollständig mit Festkörperschmierstoff ausgefüllt ist.

Eine solche Festkörperschmierstoffbefüllung der Hohlräume zwischen benachbarten Wälzkörpern einer Wälzkörperreihe kann in vorteilhafter Weiterbildung der Erfindung gleichzeitig als Distanzhalter dienen, die die Wälzkörper voneinander auf Abstand halten. Hierdurch erhält der Festkörperschmierstoff eine Doppelfunktion. Einerseits bewirkt der Festkörperschmierstoff eine Schmiermittelversorgung der Wälzkörper. Andererseits bewirkt der Festkörperschmierstoff, dass die Wälzkörperreihe auf Distanz zueinander gehalten werden.

In Weiterbildung der Erfindung kann der Festkörperschmierstoff dabei in dem Lagerspalt zwischen den Laufringen eine käfigartige Distanzhalterstruktur bilden, die mit den Wälzkörpern zusammen relativ zu den Lagerringen umläuft und die Wälzkörper einer Wälzkörperreihe nach Art eines Käfigs zueinander positioniert. Insbesondere kann eine solche käfigartige Distanzhalterstruktur Distanzhalterstücke zwischen benachbarten Wälzkörpern einerseits sowie Verbindungsstege andererseits, die die Distanzhalterabschnitte miteinander verbinden, umfassen. Die genannte käfigartige Distanzhalterstruktur kann hierbei vollständig von dem Festkörperschmierstoff gebildet werden, dessen Polymermatrix eine ausreichende Strukturfestigkeit bietet, um die Wälzkörper auf Distanz halten zu können.

Gegebenenfalls kann in vorteilhafter Weiterbildung der Erfindung auf separate Distanzhalter bzw. separate Distanzhalterstrukturen wie einen Wälzkörperkäfig gänzlich verzichtet werden, da die Festkörperschmierstoffbefüllung die Distanzhalter bzw. Distanzhalterstruktur bilden kann.

Der Matrixwerkstoff des Festkörperschmierstoffes kann in vorteilhafter Weiterbildung der Erfindung eine poröse Struktur bilden, die eine Vielzahl von kleinvolumigen Hohlräumen umfasst, in welchen das Schmiermittel eingebettet sein kann. Der Matrixwerkstoff kann hierbei ein Polymerwerkstoff sein, der zu einer zähen Struktur aushärtbar ist, die allerdings durchaus noch eine zäh verformbare, beispielsweise gummimattenartige oder moosgummiartige Verformbarkeit besitzen kann, um bei den auftretenden Verformungen und Kräften im Lagerspalt sich selbst anpassen zu können.

Insbesondere kann die Matrix des Compounds aus einem hochmolekularen oder ultrahochmolekularen Polymer bestehen, in das als Schmierstoff beispielsweise ein synthetisches Basisöl eingebettet sein kann. Beispielsweise kann als Matrix ein hochmolekulares oder ultrahochmolekulares Polyethylen Verwendung finden.

In Weiterbildung der Erfindung kann der Schmiermittelanteil des Festkörperschmierstoffs bezogen auf dessen Gesamtmasse bzw. Gesamtvolumen mehr als 50 Masse% oder mehr als 50 Volumenprozent ausmachen. Vorteilhafterweise kann der Schmiermittelanteil auch mehr als 66% Masse% oder Volumenprozent betragen. Der Rest des Festkörperschmierstoffs kann im Wesentlichen durch die Polymermatrix und zu kleineren Anteilen auch noch durch weitere Additive gebildet sein. Beispielsweise kann der Anteil der Polymermatrix an dem gesamten Festkörperschmierstoff 20-40 Masse% oder Volumenprozent betragen.

Das Großwälzlager umfasst mehrere Wälzlagerreihen. Dabei sind eine oder mehrere Axiallagerreihen und eine oder mehrere Radiallagerreihen vorgesehen, um die beiden zueinander verdrehbaren, konzentrisch angeordneten Lagerringe in axialer und/oder radialer Richtung abzustützen. Dabei kann eine oder mehrere oder jede der genannten Axial- und/oder Radiallagerreihen in der zuvor beschriebenen Weise mit zumindest einer längsnutartigen Schmiermitteltasche in der Laufbahn und/oder einer Festkörperschmiermittel-Befüllung im Lagerspalt seitlich neben der Lagerreihe und/oder mit einer Festkörperschmiermittel-Befüllung zwischen den Wälzkörpern einer Lagerreihe versehen sein. Erfindungsgemäß ist der gesamte Lagerspalt, in dem mehrere Lagerreihen angeordnet sind, vollständig mit Festkörperschmiermittel befüllt Den Dimensionen eines Großwälzlagers entsprechend können die radial äußersten und/oder die radial innersten Wälzkörperreihen einen Durchmesser von mindestens 750 mm definieren, wobei der genannte Durchmesser aber auch mehr als 1000 mm oder mehr als 2000 mm oder mehr als 3000 mm betragen kann.

Die genannten Laufbahnen an den Lagerringen können randschichtgehärtet, insbesondere induktiv gehärtet ausgebildet sein, beispielsweise auf eine Härte von mindestens 56 HRC oder mindestens 58 HRC oder auch mehr als 60 HRC.

Zumindest einer der Lagerringe kann mit der Anschlusskonstruktion verbunden sein, beispielsweise durch Schraubbolzen.

In Weiterbildung der Erfindung kann insbesondere einer der Lagerringe mit einer Verzahnung versehen sein und/oder mit einem Verzahnungsring drehfest verbunden sein, so dass einer der Lagerringe von einem entsprechenden Antrieb, beispielsweise über einen Elektro- oder Hydromotor über ein Antriebsritzel angetrieben werden kann.

Die Erfindung wird nachfolgend anhand eines bevorzugten Ausführungsbeispiels und zugehöriger Zeichnungen näher erläutert. In den Zeichnungen zeigen:
- Fig. 1:: einen Längshalbschnitt eines mittenfreien Großwälzlagers nach einer vorteilhaften Ausführung der Erfindung, gemäß der die beiden Laufringe durch zwei Axiallager in Form von Zylinderrollenlagern und ein Radiallager in Form eines Zylinderrollenlagers gegeneinander abgestützt sind,
- Fig. 2:: einen Längshalbschnitt eines mittenfreien Großwälzlagers, nicht Teil der Erfindung, gemäß der die beiden Laufringe durch zwei Kegelrollenlager gegeneinander abgestützt sind,
- Fig. 3:: einen Längshalbschnitt eines mittenfreien Großwälzlagers nach einer weiteren vorteilhaften Ausführung der Erfindung, gemäß der die beiden Laufringe durch drei Axiallager in Form von Zylinderrollenlagern und zwei Radiallagern in Form eines Kugellagers und eines Zylinderrollenlagers gegeneinander abgestützt sind,
- Fig. 4:: eine ausschnittsweise Schnittansicht des Großwälzlagers aus Fig. 1 im Bereich der Kugellagerreihe, die den mit Festschmierstoff befüllten Lagerspalt zeigt.

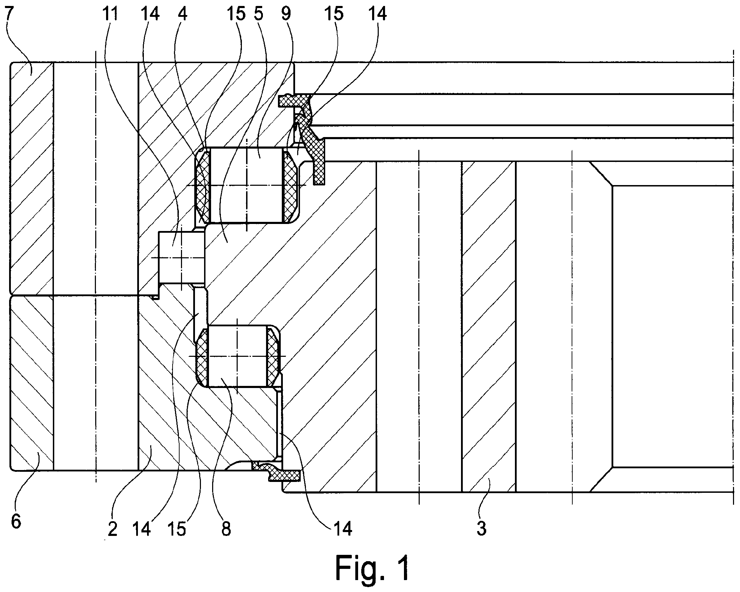

Wie die Fig. 1 bis 3 zeigen, kann das Großwälzlager 1 zwei Laufringe 2 und 3 umfassen, von denen der eine Laufring 2 einen Innenring und der andere Laufring 3 einen Außenring bildet. Der genannte Innenring 2 kann einen kleineren Innendurchmesser als der Außenring 3 besitzen und/oder der Außenring 3 kann einen größeren Außendurchmesser als der genannte Innenring 2 besitzen.

Wie Fig. 1 zeigt, kann der eine Laufring 2, beispielsweise der Außenring, eine zum anderen Laufring 3, beispielsweise zum Innenring hin, eine offene Nut 4 besitzen, in die der andere Laufring 3 mit einem daran vorgesehenen Nasenring 5 unter Bildung eines Spalts bzw. mit allseitigem Abstand eingreift. Wie Fig. 1 zeigt, kann die genannte Nut dabei den Nasenring 5 von drei Seiten her umgreifen, und zwar an zwei gegenüberliegenden Stirnflächenseiten und einer Mantelflächenseite.

Wie Fig. 1 zeigt, kann der eine Laufring 2 gegenüber dem anderen Laufring 3 durch drei Lager abgestützt sein, beispielsweise zwei Axiallager 8 und 9 sowie ein Radiallager 11, wobei die genannten Axial- und Radiallager 8, 9 und 11 in der Nut zwischen dem genannten Nasenring 5 und der genannten Nut 4 angeordnet sein können.

Wie Fig. 1 zeigt, können die Axiallager 8, 9 und das Radiallager 11 jeweils als Zylinderrollenlager ausgebildet sein, wobei das Radiallager 11 kleinere Wälzkörper aufweisen kann als die beiden Axiallager 8 und 9. Die beiden Axiallager 8 und 9 können wiederum unterschiedlich dimensionierte Wälzkörper besitzen, je nachdem in welcher Richtung stärkere Axialkräfte wirken.

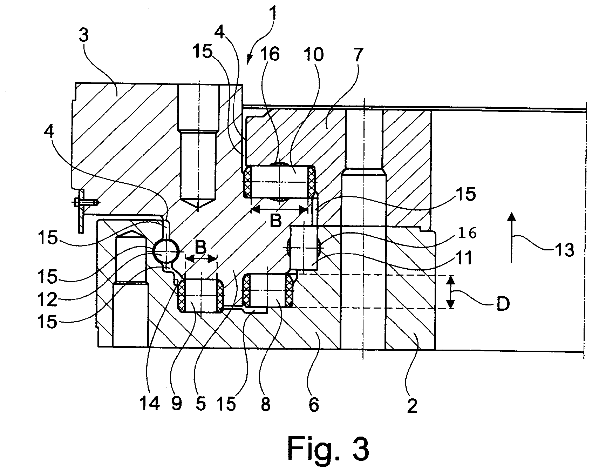

Eine weitere mögliche Ausführung zeigt Fig. 3. Der eine Laufring 2, beispielsweise der Innenring, kann eine zum anderen Laufring 3, beispielsweise zum Außenring hin, eine offene Nut 4 besitzen, in die der andere Laufring 3 mit einem daran vorgesehenen Nasenring 5 unter Bildung eines Spalts bzw. mit allseitigem Abstand eingreift. Die genannte Nut 4 kann dabei vorteilhafterweise den Nasenring 5 von vier Seiten her umgreifen, und zwar an zwei gegenüberliegenden Mantelflächenseiten und an zwei gegenüberliegenden Stirnflächenseiten des genannten Nasenrings 5.

Um den Nasenring 5 in die genannte Nut 4 einsetzen zu können, kann der die Nut 4 aufweisende Laufring 2 aus einem Tragring 6 und einem darauf aufsetzbaren Haltering 7 zusammengesetzt sein, vgl. Fig. 1.

Der genannte Nasenring 5 kann gegenüber der Nut 4 auch durch drei Axiallager 8, 9 und 10 sowie durch zwei Radiallager 11 und 12 abgestützt sein, wie dies Fig. 3 zeigt. Vorteilhafterweise können dabei zwei der genannten Axiallager 8 und 9 auf derselben - gemäß Fig. 3 der unteren - Nasenringstirnseite und das dritte Axiallager 10 auf der gegenüberliegenden Nasenringstirnseite angeordnet sein. Auch die Radiallager 11 und 12 können auf gegenüberliegenden Seiten, nämlich gegenüberliegenden Mantelflächenseiten des genannten Nasenrings 5 angeordnet sein, so dass der Nasenring 5 sowohl in axialer Richtung als auch in radialer Richtung zwischen auf gegenüberliegenden Seiten befindlichen Lagern sandwichartig eingebettet bzw. abgestützt ist. Der Nasenring 5 ist allseitig an der Nut 4 abgestützt.

Wie Fig. 3 zeigt, können die beiden auf derselben Nasenringstirnseite vorgesehenen Axiallager 8 und 9 nicht nur in radialer Richtung voneinander beabstandet und auf verschiedenen Laufbahnen angeordnet sein, sondern auch in axialer Richtung - d.h. in Richtung des Pfeils 13 - zueinander versetzt angeordnet sein, so dass die beiden Axiallager 8 und 9 nicht auf derselben Höhe liegen.

Die beiden Radiallager 11 und 12 können einander gegenüberliegend angeordnet sein. Hiervon unabhängig kann es vorteilhaft sein, wenn die beiden Radiallager 11 und 12 zwischen den Axiallagern 8, 9 und 10 angeordnet sind, vgl. Fig. 3.

Wie die Figuren zeigen, können unterschiedliche Wälzkörpertypen Verwendung finden. Insbesondere können die beiden Radiallager 11 und 12 verschiedene Wälzkörpergeometrien besitzen, wobei insbesondere eines der Radiallager 11 als Zylinderrollenlager und das andere Radiallager 12 als Kugellager ausgebildet sein kann.

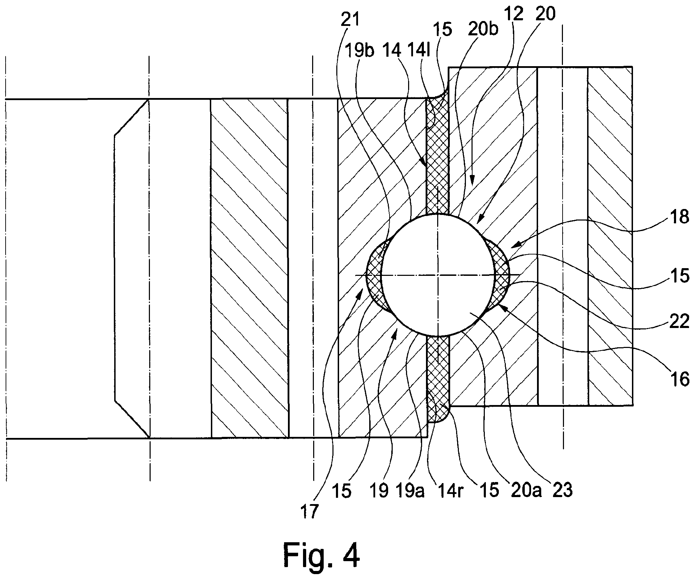

Wie Fig. 4 zeigt, ist der Lagerspalt 14 zwischen den Laufringen 2 und 3 des Großwälzlagers 1 vollständig mit einem Festkörperschmierstoff befüllt.

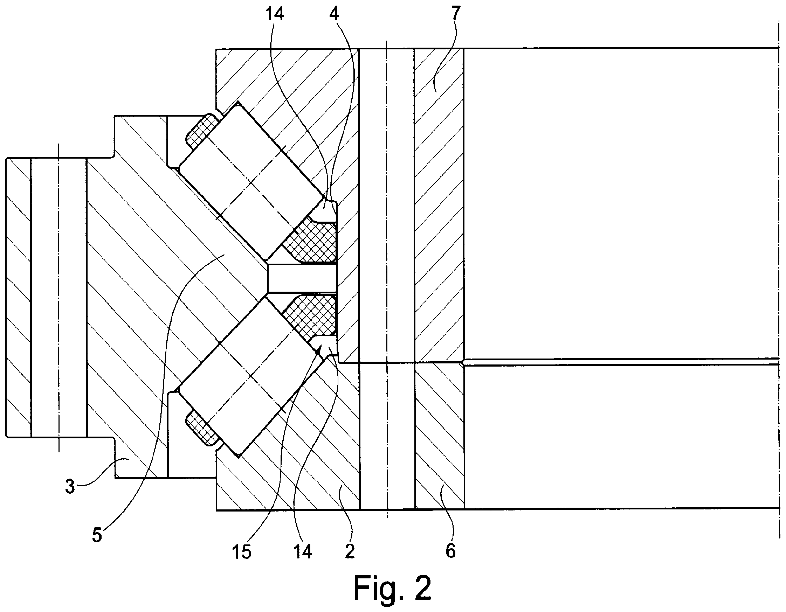

Vorteilhafterweise kann dabei zumindest eine Laufbahn zumindest einer Lagerreihe, beispielsweise die Laufbahnen des als Kugellager ausgebildeten Axiallagers 12, ggf. aber auch die anderen Lagerreihen, in einem Mittenabschnitt der Laufbahn eine längsnutartige Schmiermitteltasche 16 aufweisen, wobei vorteilhafterweise in jeder der beiden gegenüberliegenden Laufbahn der jeweiligen Lagerreihe eine solche Schmiermitteltasche 16 vorgesehen sein kann, die sich nach Art einer Längsnut entlang der Wälzkörperreihe erstreckt, vgl. Fig. 4. Alternativ kann eine solche Schmiermitteltasche aber auch weggelassen werden, vgl. Fig. 1 und 2.

Wie Fig. 4 zeigt, können Mittenabschnitte 17 und 18 der Laufbahnen 19 und 20 mit einer längsnutartigen Ausnehmung versehen sein, die eine Schmiermitteltasche 21 bzw. 22 bildet und mit Festkörperschmierstoff 15 vorzugsweise vollständig befüllt ist. Beiderseits der genannten Schmiermitteltasche 21 und 22 schließen sich Laufbahnabschnitte 19a, b und 20a, b an, die die Wälzkörper 23 tragen.

Wie Fig. 4 zeigt, kann die genannte Schmiermitteltasche 21 bzw. 22 im Querschnitt betrachtet eine etwa halbmondförmige Konturierung besitzen, die zentral in der Mitte eine maximale Tiefe besitzen kann und zu den Seiten hin immer flacher ausläuft und/oder Sichelspitzen bildet.

Sind die genannten Wälzkörper 23 als Kugeln ausgebildet wie dies Fig. 4 zeigt, können die sich seitlich anschließenden Laufbahnabschnitte 19a, b und 20a, b jeweils halbschalen- bzw. viertschalenförmig konturiert sein oder je nach Ausbildung des Lagers allgemein schalenförmig konturiert sein und sich an die kugelförmigen Wälzkörper anschmiegen, wobei eine entsprechende Ausbildung auch bei tonnenförmigen Wälzkörpern möglich ist. Grundsätzlich kann die genannte Schmiermitteltasche aber auch bei anderen Wälzkörperformen, beispielsweise Zylinderrollen oder Kegelrollen vorgesehen werden.

Zusätzlich zu den genannten Schmiermitteltaschen 21 und 22 in den Laufbahnen 19 bzw. 20 des Beispiels der Fig. 4 kann der Lagerspalt 14 auch in Seitenabschnitte rechts und links der Wälzkörperreihe mit dem Festkörperschmierstoff 15 befüllt sein, vgl. Fig. 1 und 2, wobei der genannte Lagerspalt 14 dort vorteilhafterweise ebenfalls vollständig befüllt sein kann, insbesondere derart, dass der Festkörperschmierstoff 15 eine Brücke zwischen den Lagerringen 2 und 3 bildet und diese miteinander verbindet und/oder den Lagerspalt 14 nach außen hin abdichtet.

Dabei können die genannten seitlichen Lagerspaltabschnitte seitlich neben den Wälzkörpern im Wesentlichen über die gesamte Breite des Lagerspalts 14 mit Festkörperschmierstoff 15 befüllt sein.

Ferner können auch die Lagerspaltabschnitte zwischen benachbarten Wälzkörpern 23 einer Wälzkörperreihe mit Festkörperschmierstoff 15 befüllt sein, so dass der zwischen benachbarten Wälzkörpern vorgesehene Festkörperschmierstoff 15 sozusagen Distanzhalter zwischen den Wälzkörpern 23 bildet, die die Wälzkörper auf Abstand voneinander halten.

Die genannten Lagerspaltabschnitte zwischen den Wälzkörpern 23 einer Wälzkörperreihe können mit den in Fig. 4 gezeigten seitlichen Lagerspaltabschnitten 14r und 14l verbunden sein, so dass der Festkörperschmierstoff 15 einen die Wälzkörper 23 umgebenden Käfig aus Festkörperschmierstoff 15 bildet, der sich zusammen mit den Wälzkörpern 23 relativ zu den beiden Laufringen 2 und 3 dreht. Diese käfigartige Distanzhalterstruktur aus Feststoffschmiermittel 15 umfasst insbesondere die beiden sich - im Querschnitt eines Lagers betrachtet - rechts und links von einer jeweiligen Wälzkörperreihe erstreckenden Ringe aus Feststoffschmiermittel rechts und links der Wälzkörper 23, welche Ringe aus Festkörperschmiermittel zwischen den Wälzkörpern brückenartig miteinander verbunden sind, und zwar ebenfalls durch Festkörperschmierstoff, der sich in den Hohlräumen zwischen benachbarten Wälzkörpern 23 erstreckt.

## Patentansprüche

1. Großwälzlager, insbesondere mittenfreies Großwälzlager (1), mit zwei konzentrischen Laufringen (2, 3), zwischen denen in einem Lagerspalt (14) eine Vielzahl von Wälzkörpern (23), die in mehreren Lagerreihen angeordnet sind, vorgesehen sind, die jeweils auf zumindest zwei Laufbahnen (19, 20) abwälzen, wobei die mehreren Lagerreihen in dem Lagerspalt (14) zumindest eine Axiallagerreihe (8, 9) zum Abstützen der konzentrischen Laufringe (2, 3) in axialer Richtung und zumindest eine Radiallagerreihe (11) zum Abstützen der beiden Laufringe (2, 3) in radialer Richtung umfassen, **dadurch gekennzeichnet, dass** der gesamte Lagerspalt (14) zwischen den Laufringen (2, 3), in dem die zumindest eine Axiallagerreihe (8, 9) und die zumindest eine Radiallagerreihe (11) angeordnet sind, vollständig mit einem Festkörperschmierstoff (15), der eine Polymermatrix und einen darin eingebetteten Schmierstoff umfasst, befüllt ist, wobei der Festkörperschmierstoff (15) den Lagerspalt (14) zu den Wälzkörpern (23) hin nach außen abdichtet und der Lagerspalt (14) frei von vom Festkörperschmierstoff (15) separaten Dichtungen ausgebildet ist.

2. Großwälzlager nach dem vorhergehenden Anspruch, wobei zumindest eine der Laufbahnen (19, 20) in einem Mittenabschnitt (17, 18) eine längsnutartige Schmiermitteltasche (21, 22) aufweist, die mit dem Festkörperschmierstoff (15) vollständig befüllt ist und beiderseits von Laufbahnabschnitten (19a, b; 20a, b) flankiert ist, die die Wälzkörper (23) tragen.

3. Großwälzlager nach dem vorhergehenden Anspruch, wobei sich die beiderseitigen Laufbahnabschnitte (19a, b; 20a, b) jeweils schalenförmig an die kugel- oder tonnenförmigen Wälzkörper (23) schmiegen und die Schmiermitteltasche (21, 22) im Querschnitt betrachtet eine etwa halbmondförmige Ausbauchung zwischen den genannten Laufbahnabschnitten bildet, die mit Festkörperschmierstoff (15) befüllt ist.

4. Großwälzlager nach einem der vorhergehenden Ansprüche, wobei der Festkörperschmierstoff (15) in den Zwischenräumen zwischen benachbarten Wälzkörpern (23) derselben Wälzkörperreihe Distanzhalter zwischen den Wälzkörpern (23) der Wälzkörperreihe bildet, die die Wälzkörper (23) voneinander beabstandet halten.

5. Großwälzlager nach einem der vorhergehenden Ansprüche, wobei der Festkörperschmierstoff (15) in dem Lagerspalt (14) eine käfigartige Distanzhalterstruktur bildet, die zusammen mit den Wälzkörpern (23) relativ zu den beiden Lagerringen umläuft.

6. Großwälzlager nach dem vorhergehenden Anspruch, wobei die käfigartige Distanzhalterstruktur einerseits durch den Festkörperschmierstoff (15) gebildete Distanzhalterelemente zwischen benachbarten Wälzkörpern (23) einer Wälzkörperreihe und andererseits vom Festkörperschmierstoff (15) gebildete Verbindungselemente umfasst, die die genannten Distanzhalterelemente miteinander verbinden.

7. Großwälzlager nach einem der beiden vorhergehenden Ansprüche, wobei die Distanzhalterstruktur ausschließlich durch den Festkörperschmierstoff (15) gebildet ist.

8. Großwälzlager nach einem der vorhergehenden Ansprüche, wobei die Polymermatrix des Festkörperschmierstoffs (15) aus einem hochmolekularen, vorzugsweise ultrahochmolekularen Polyethylen besteht.

9. Großwälzlager nach einem der vorhergehenden Ansprüche, wobei die Polymermatrix des Festkörperschmierstoffs (15) eine poröse, eine Vielzahl von kleinvolumigen Ausnehmungen umfassende, insbesondere etwa schwammartige, Matrix bildet und damit eine formstabile, jedoch verformbare und/oder kompressible, insbesondere zähe Matrixstruktur bildet.

10. Großwälzlager nach einem der vorhergehenden Ansprüche, wobei der in der Polymermatrix eingebettete Schmierstoff ein vorzugsweise synthetisches Öl ist, das vorzugsweise eine Viskosität im Bereich von etwa 75-200 mm²/s und/oder eine Viskosität im Bereich von 10-25 mm²/s bei 100°C aufweist.

11. Großwälzlager nach einem der vorhergehenden Ansprüche, wobei der in die Polymermatrix eingebettet Schmierstoff bezogen auf die gesamte Masse oder das gesamte Volumen des Festkörperschmierstoffs einen Anteil von mehr als 50 Masse% oder mehr als 50 Volumenprozent aufweist und/oder die Polymermatrix einen Anteil von 20-40 Masse% oder Volumenprozent aufweist.

12. Großwälzlager nach einem der vorhergehenden Ansprüche, wobei ein von einer äußersten oder innersten Wälzkörperreihe definierter Durchmesser des Großwälzlagers mehr als 750 mm oder mehr als 1000 mm oder mehr als 2000 mm beträgt.

13. Großwälzlager nach einem der vorhergehenden Ansprüche, wobei die Laufbahnen (19, 20) der Laufringe (2, 3) randschichtgehärtet, insbesondere induktiv gehärtet sind und eine Härte von mehr als 52 HRC oder mehr als 56 HRC oder mehr als 57 HRC oder mehr als 58 HRC oder mehr als 59 HRC aufweisen.

14. Großwälzlager nach einem der vorhergehenden Ansprüche, wobei zumindest einer der Laufringe Anschlussmittel zum Anschließen einer Anschlusskonstruktion, insbesondere Schraubbolzenverbindungsmittel, aufweist und einer der Laufringe (2, 3) mit einer Verzahnung versehen oder drehfest verbunden ist.

## Claims

1. Large roller bearing, in particular an open centered large roller bearing (1), having two concentric ball races (2, 3) between which a plurality of rolling elements (23) arranged in multiple bearing rows are provided in a bearing gap (14), that roll off on at least two raceways (19, 20), wherein the multiple bearing rows in the bearing gap (14) comprise at least one axial bearing row (8, 9) for supporting the concentric ball races (2, 3) in axial direction and at least one radial bearing row (11) for supporting the two races (2, 3) in the radial direction, **characterized in that** the entire bearing gap (14) between the ball races (2, 3), in which the at least one axial bearing row (8, 9) and the at least one radial bearing row (11) are arranged, is completely filled with a solid lubricant (15), that comprises a polymer matrix and a lubricant embedded therein, wherein the solid lubricant (15) seals the bearing gap (14) toward the rolling elements (23) toward the outside and the bearing gap (14) is formed free of seals separate from the solid lubricant.

2. Large roller bearing in accordance with the preceding claim, wherein at least one of the raceways (19, 20) has an elongate groove-like lubricant pocket (21, 22) in a center section (17, 18) that completely filled with the solid lubricant (15) and is flanked at both sides by raceway sections (19a, b; 20a, b) that support the rolling elements (23).

3. Large roller bearing in accordance with the preceding claim, wherein the raceway sections (19a, b; 20a, b) at both sides each nestle in shell form at the spherical or barrel-shaped rolling elements (23) and the lubricant pocket (21, 22), viewed in cross-section, forms an approximately crescent-shaped convexity between said raceway sections that is filled with solid lubricant (15).

4. Large roller bearing in accordance with one of the preceding claims, wherein the solid lubricant (15) forms spacers between the rolling elements (23) of the rolling element row that hold the rolling elements (23) spaced apart from one another in the intermediate spaces between adjacent rolling elements (23) of the same rolling element row.

5. Large roller bearing in accordance with one of the preceding claims, wherein the solid lubricant (15) forms a cage-like spacer structure in the bearing gap (14) that runs around together with the rolling elements (23) relative to the two bearing rings.

6. Large roller bearing in accordance with the preceding claim, wherein the cage-like spacer structure comprises, on the one hand, spacer elements formed by the solid lubricant (15) between adjacent rolling elements (23) of a rolling element row and, on the other hand, connection elements that are formed by the solid lubricant (15) and that connect said spacer elements to one another.

7. Large roller bearing in accordance with one of the two preceding claims, wherein the spacer structure is exclusively formed by the solid lubricant (15).

8. Large roller bearing in accordance with one of the preceding claims, wherein the polymer matrix of the solid lubricant (15) consists of a high molecular, preferably an ultrahigh molecular, polyethylene.

9. Large roller bearing in accordance with one of the preceding claims, wherein the polymer matrix of the solid lubricant (15) forms a porous, in particular approximately sponge-like, matrix comprising a plurality of small-volume cutouts and thus forms a matrix structure that is stable in shape, but deformable and/or compressible, and in particular viscous.

10. Large roller bearing in accordance with one of the preceding claims, wherein the lubricant embedded in the polymer matrix is a preferably synthetic oil that preferably has a viscosity in the range of approximately 75-200 mm²/s and/or a viscosity in the range of 10-25 mm²/s at 100°C.

11. Large roller bearing in accordance with one of the preceding claims, wherein the lubricant embedded in the polymer matrix has a portion of more than 50 mass% or more than 50 volume percent and/or the polymer matrix has a portion of 20-40 mass% or volume percent with respect to the total mass or to the total volume of the solid lubricant.

12. Large roller bearing in accordance with one of the preceding claims, wherein a diameter of the large roller bearing defined by an outermost or innermost rolling element row amounts to more than 750 mm or more than 1000 mm or more than 2000 mm.

13. Large roller bearing in accordance with one of the preceding claims, wherein the raceways (19, 20) of the ball races (2, 3) are marginal layer hardened, in particular inductively hardened, and have a hardness of more than 52 HRC or more than 56 HRC or more than 57 HRC or more than 58 HRC or more than 59 HRC.

14. Large roller bearing in accordance with one of the preceding claims, wherein at least one of the ball races has connection means for connecting a connection construction, in particular bolt connection means and one of the ball races (2, 3) is provided with or rotationally fixedly connected to gear teeth.

## Revendications

1. Palier à roulement de grande dimension, notamment palier à roulement de grande dimension sans centre (1), avec deux bagues de roulement concentriques (2, 3), entre lesquelles sont prévus, dans un interstice de palier (14), une pluralité de corps de roulement (23), qui sont agencés en plusieurs rangées de paliers, et qui roulent chacun sur au moins deux chemins de roulement (19, 20), les plusieurs rangées de paliers dans l'interstice de palier (14) comprenant au moins une rangée de paliers axiaux (8, 9) pour soutenir les bagues de roulement concentriques (2, 3) dans la direction axiale et au moins une rangée de paliers radiaux (11) pour soutenir les deux bagues de roulement (2, 3) dans la direction radiale, **caractérisé en ce que** la totalité de l'interstice de palier (14) entre les bagues de roulement (2, 3), dans lequel l'au moins une rangée de paliers axiaux (8, 9) et l'au moins une rangée de paliers radiaux (11) sont agencées, est entièrement rempli d'un lubrifiant solide (15), qui comprend une matrice polymère et un lubrifiant qui y est incorporé, le lubrifiant solide (15) assurant l'étanchéité vers l'extérieur de l'interstice de palier (14) par rapport aux corps de roulement (23) et l'interstice de palier (14) étant réalisé exempt de joints d'étanchéité séparés du lubrifiant solide (15).

2. Palier à roulement de grande dimension selon la revendication précédente, dans lequel au moins l'un des chemins de roulement (19, 20) présente, dans une section centrale (17, 18), une poche de lubrifiant (21, 22) en forme de rainure longitudinale, qui est entièrement remplie du lubrifiant solide (15) et qui est flanquée des deux côtés de sections de chemin de roulement (19a, b ; 20a, b) qui portent les corps de roulement (23).

3. Palier à roulement de grande dimension selon la revendication précédente, dans lequel les sections de chemin de roulement (19a, b ; 20a, b) situées des deux côtés s'adaptent chacune en forme de coque aux corps de roulement (23) en forme de bille ou de tonneau et la poche de lubrifiant (21, 22) forme, considérée en coupe transversale, un bombement approximativement en forme de demi-lune entre lesdites sections de chemin de roulement, qui est rempli de lubrifiant solide (15).

4. Palier à roulement de grande dimension selon l'une quelconque des revendications précédentes, dans lequel le lubrifiant solide (15) forme, dans les espaces intermédiaires entre des corps de roulement (23) voisins de la même rangée de corps de roulement, des écarteurs entre les corps de roulement (23) de la rangée de corps de roulement, qui maintiennent les corps de roulement (23) espacés les uns des autres.

5. Palier à roulement de grande dimension selon l'une quelconque des revendications précédentes, dans lequel le lubrifiant solide (15) forme dans l'interstice de palier (14) une structure d'écartement en forme de cage qui tourne conjointement avec les corps de roulement (23) par rapport aux deux bagues de palier.

6. Palier à roulement de grande dimension selon la revendication précédente, dans lequel la structure d'écartement en forme de cage comprend, d'une part, des éléments d'écartement formés par le lubrifiant solide (15) entre des corps de roulement (23) voisins d'une rangée de corps de roulement et, d'autre part, des éléments de liaison formés par le lubrifiant solide (15), qui relient lesdits éléments d'écartement entre eux.

7. Palier à roulement de grande dimension selon l'une quelconque des deux revendications précédentes, dans lequel la structure d'écartement est formée exclusivement par le lubrifiant solide (15).

8. Palier à roulement de grande dimension selon l'une quelconque des revendications précédentes, dans lequel la matrice polymère du lubrifiant solide (15) est constituée d'un polyéthylène de poids moléculaire élevé, de préférence de poids moléculaire ultra-élevé.

9. Palier à roulement de grande dimension selon l'une quelconque des revendications précédentes, dans lequel la matrice polymère du lubrifiant solide (15) forme une matrice poreuse, comprenant une pluralité d'évidements de petit volume, notamment approximativement de type éponge, et forme ainsi une structure de matrice de forme stable, mais déformable et/ou compressible, notamment ductile.

10. Palier à roulement de grande dimension selon l'une quelconque des revendications précédentes, dans lequel le lubrifiant incorporé dans la matrice polymère est une huile de préférence synthétique, qui présente de préférence une viscosité dans la plage d'environ 75 à 200 mm²/s et/ou une viscosité dans la plage de 10 à 25 mm²/s à 100 °C.

11. Palier à roulement de grande dimension selon l'une quelconque des revendications précédentes, dans lequel le lubrifiant incorporé dans la matrice polymère présente une proportion de plus de 50 % en masse ou plus de 50 pour cent en volume par rapport à la masse totale ou au volume total du lubrifiant solide, et/ou la matrice polymère présente une proportion de 20 à 40 % en masse ou pour cent en volume.

12. Palier à roulement de grande dimension selon l'une quelconque des revendications précédentes, dans lequel un diamètre du palier à roulement de grande dimension défini par une rangée de corps de roulement la plus extérieure ou la plus intérieure est supérieur à 750 mm ou supérieur à 1 000 mm ou supérieur à 2 000 mm.

13. Palier à roulement de grande dimension selon l'une quelconque des revendications précédentes, dans lequel les chemins de roulement (19, 20) des bagues de roulement (2, 3) sont durcis sur la couche de bord, notamment durcis par induction, et présentent une dureté supérieure à 52 HRC ou supérieure à 56 HRC ou supérieure à 57 HRC ou supérieure à 58 HRC ou supérieure à 59 HRC.

14. Palier à roulement de grande dimension selon l'une quelconque des revendications précédentes, dans lequel au moins l'une des bagues de roulement présente des moyens de raccordement pour le raccordement d'une construction de raccordement, notamment des moyens de liaison à boulon fileté, et l'une des bagues de roulement (2, 3) est pourvue d'une denture ou est reliée de manière solidaire en rotation.
